Europäisches Patentamt

(19) European Patent Office

Office européen des brevets

(11) Publication number: **0 020 722**
**B1**

(12) **EUROPEAN PATENT SPECIFICATION**

(45) Date of publication of patent specification: **18.05.83**

(21) Application number: **80900132.4**

(22) Date of filing: **29.11.79**

(86) International application number:
**PCT/US79/01032**

(87) International publication number:
**WO 80/01211 12.06.80 Gazette 80/13**

(51) Int. Cl.³: **C 09 H 1/02, A 23 L 1/31,
C 11 B 1/00**

(54) **LOW FAT STABILIZED BONE AND METHOD OF PRODUCING.**

(30) Priority: **04.12.78 US 966078**

(43) Date of publication of application:
**07.01.81 Bulletin 81/1**

(45) Publication of the grant of the patent:
**18.05.83 Bulletin 83/20**

(84) Designated Contracting States:
**AT CH DE FR GB LU NL SE**

(56) References cited:
**GB - A - 806 705**
**SU - A - 502 011**
**US - A - 2 875 222**
**US - A - 3 180 880**
**US - A - 3 352 841**
**US - A - 3 352 842**
**US - A - 3 398 677**
**US - A - 3 906 118**
**US - A - 4 025 001**

(73) Proprietor: **DARLING-DELAWARE CO., INC.**
**4650 South Racine Avenue**
**Chicago, IL 60609 (US)**

(72) Inventor: **WOJCIK, Herbert W.**
**12606 E. Navajo Drive**
**Palos Heights, IL 60463 (US)**

(74) Representative: **Goddar, Heinz, Dr. et al,**
**FORRESTER & BOEHMERT Widenmayerstrasse
4/I**
**D-8000 München 22 (DE)**

Courier Press, Leamington Spa, England.

Low fat stabilized bone and method of producing

The invention relates generally to cleaning and stabilizing raw bone for making high quality gelatin, glue and similar proteins, and, more particularly, to a continuous process of preparing low fat stabilized bone of improved quality which gives increased yields of high quality gelatin and glue.

Bones from cattle and hogs contain substantial amounts of collagen and have long been used for making gelatin, glue and other protein products. An important source of bone useful for making high grade gelatin and glue is trimmed raw bone from meat packing plants and boning plants were carcasses are trimmed to remove most of the useful meat tissue and fat. The trimmed raw bone, however, contains considerably more fat and meat tissue than can be tolerated when the bone is used for making gelatin or glue and the bone must be separated from most of the fat and meat tissue before being used for making gelatin or glue.

Heretofore, the most common method of separating fat and meat tissue adhering to raw trimmed bone has been to heat the bone material while in contact with water or liquid fat until the residual fat on the bone is liquified and the adhering meat tissue separates from the bone. When the bone is contacted with a hot aqueous solution for a period sufficiently long to effect separating the fat and meat from the bone, a significant portion of the protein in the bone is degraded and the quality of the gelatin or glue produced is reduced. Also, when the bone is heated in contact with liquid fat the pores of the bone become saturated with fat so that the quality of the gelatin or glue made therefrom is also reduced.

The residual fat and meat tissue on raw trimmed bone has also been separated from the raw bone during the recovery of useful meat in the form of pate by compressing the bone in a screw type press mounted within a perforated casing having a choke mounted in the discharge end of the casing so that fat and meat tissue are forced through the perforations in the casing. The pressed bone which is discharged from the choke end of the casing has a wide range of particle sizes and contains considerable fat and meat tissue. Heretofore it has not been considered feasible to reduce the fat and meat content of a raw bone material sufficiently to permit use of the bone for producing high quality gelatin without heating the raw bone material prior to pressing.

An apparatus and methods for rendering animal materials and products produced thereby has been described in US—A 3 398 677. In the cited patent the use of a pre-heating step (pre-conditioning treatment) for the raw bone material prior to introducing the raw bone material into a press is required.

It is an object of the present invention to provide a more economical process of producing a clean and stabilized bone product utilizing pressed bone material.

It is also an object of the present invention to provide a clean and stabilized bone product from pressed bone material in a more economical manner.

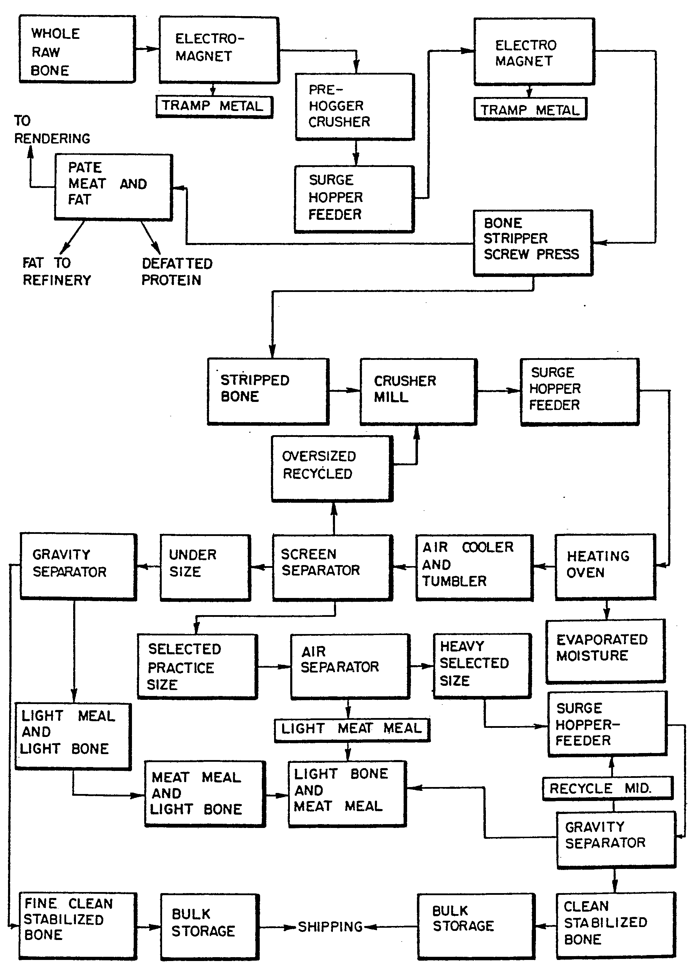

Other objects of the present invention will be apparent from the detailed description and claims to follow when read in conjunction with the accompanying drawing comprising a block flow diagram illustrating the preferred process of the present invention.

Generally, the continuous process for producing low fat stabilized bone of improved quality in accordance with the present invention comprises depositing raw trimmed bone as received from a meat packing plant or boning plant into a receiving bin and continuously conveying the bone material by screw conveyor means from the bin to a pre-hogger where tramp metal is removed and the bone is crushed and reduced in size from its natural state to pieces ranging between about 2,5 and 15 cm in length. The crushed bone leaving the pre-hogger is in the from of a flowable mixture containing crushed bone, bone marrow, blood, fat, meat tissue and moisture. From the pre-hogger the crushed bone and adhering fat and meat tissue is then fed continuously into a screw type press mounted within a perforated cage or casing which has a choke mounted at the discharge end for controlling the pressure applied to the crushed bone within the cage. By adjusting the choke sufficient pressure is applied to the raw bone by the screw to force a substantial amount of the soft non-bone material, such as the fat, meat tissue and liquid in the crushed bone material through the lateral openings in the cage and continuously discharging presed bone at the choke end of the press. The pressed bone as discharged from the screw press has a substantially uniform composition regardless of the amount of fat, meat tissue and moisture in the raw bone material. The pressed bone stripped of a substantial portion of the fat, meat tissue and moisture is then preferably conveyed by suitable means to a crusher mill, such as a hammer-mill, which further reduces the size of the bone particles.

The pressed bone is then continuously fed into an oven in which the particulate material is heated to a maximum temperature of about 121°C until the pieces of fat and meat tissue adhering to the bone particles are crisp so that the pieces of fat and meat tissue will be readily fractured and separated from the bone particles. The baking oven is preferably an oven from which air is excluded and in which a positive pressure is maintained as a result of heating the vaporized moisture in the feed material to a temperature of about 121°C. The bone particles and adhering pieces of crisp fat and meat tissue are then subjected to a dry separation treatment in which the material is screened to provide a selected particle size range.

The selected particle size range material from the screen sizer is next deposited onto a gravity separator comprised of an inclined vibrating screen air table on which the high density clean bone particles substantially free of fat and meat tissue climb to the upper end section and are collected separately from the particles of low density fat and meat tissue which are unable to climb to the upper end of the air table. The dry separation treatment comprising screen sizing and gravity separation removes substantially all of the residual fat and meat tissue and produces a clean stabilized bone which yields gelatin of the highest quality in a very economical manner.

The following is a more detailed description of the process of preparing low fat stabilized bone in accordance with the present invention.

Raw bone material

The bone material which can be processed in accordance with the present invention can be any raw boned material but preferably is trimmed beef carcass bones or trimmed hog carcass bones. Preferably the raw trimmed bones are deposited in a material receiving pit or bin with beef bones processed separately from hog bones when producing low fat stabilized bone for high quality gelatin. The degree to which the bones are trimmed to remove fat and meat tissue is not critical, since the present process is capable of handling bones having a large amount of residual fat and meat tissue. The raw bone receiving bins or pits are equipped with screw conveyor means which carry the raw bones to a pre-hogger in which the bones are reduced to a size suitable for processing.

The pre-hogger

The pre-hogger has associated therewith an electromagnet which removes tramp metal before the raw bone is fed into the pre-hogger and can be of any conventional design comprising a rotating cylinder having a plurality of spaced teeth on the surface which pass through spaced bars mounted in a fixed backing plate. The teeth co-act with the plate to crush the raw bone and adhering material to form relative uniform sized pieces. For example, the pre-hogger used when producing low fat stabilized bone for making high quality gelatin preferably is adapted to produce pieces which range in size between about 2,5 cm by 2,5 cm to 2,5 cm by 15 cm. The crushed raw bone is then conveyed to a surge-hopper-feeder which is adapted to hold a large quantity of crushed bone material (i.e. 40,000) in order to insure a continuous supply of raw bone material for further continuous processing in a bone stripper means when the raw trimmed bone is intermittently delivered to the receiving pits. The crushed bone material as discharged from the pre-hogger has an approximate composition all on a weight basis of 30—40 percent moisture, 30 percent meat tissue, 20—30 percent fat and 20 percent bone with a bulk density of about 0,9 g/cm³.

Raw bone stripper

Conveyor means carry the raw crushed bone preferably from the surge-hopper over a second magnetic separator which removes any remaining tramp metal and continuously feeds the raw crushed bone into a screw type press mounted within a cage which preferably has lateral slots therein spaced a distance less than the minimum size desired in the final product (i.e. about 2,4 mm) and a choke mounted axially therein at the discharge end of the cage adapted to maintain a pressure on the raw crushed bone within the cage of from about 1,75 to 35 bar. A satisfactory raw bone press of the foregoing type is a 10″ "Duke Pressor" manufactured by the Dupps Company of Germantown, Ohio. The 10 "Duke Pressor" has a capacity of about 9000 kg per hour and employs an interrupted screw flight to prevent forming a mass of bone particles along the wall of the cage. With the 10″ "Duke Pressor" a choke pressure of preferably about 21 bar is applied to the bone material using 75—80 percent power in a 150 KW electric motor for efficiently separating the soft tissue and fat from the raw trimmed bone material. The pressed bone material as discharged from the raw bone stripper at a rate of about 5000 kg per hour has a size ranging from about 0,3 cm to 4 cm and an average size ranging between 0,65 cm and 3,2 cm. Regardless of the raw bone composition the pressed bone material as discharged from the screw press contains between about 20 to 25 percent moisture, 10 to 12 percent meat tissue and about 2 to about 6 percent by weight fat. The density of the pressed bone material is about 0,9 g/cm³. As discharged from the stripper the pressed bone has a temperature of between about 43 to about 49°C. It will be evident that the screw press is very effective in removing fat and meat tissue from the crushed bone material without contacting the bone with a hot aqueous solution or molten fat.

The soft tissue and fat which is discharged through the slots in the cage are further processed to provide valuable products, such as pate, meat flavors, and rendered fat.

The crusher mill

The pressed raw bone from the stripper when producing low fat stabilized bone for gelatin is then preferably fed into a conventional hammer mill without using a bottom screen to further reduce the size of the pressed bone material to an average size of about 1,3 cm without forming more than a minor proportion of bone particles less than 0,32 cm in diameter. A crusher mill suitable for use in reducing the bone to the foregoing particle size can be any conventional hammer mill, such as the Prater Mill manufactured by the Prater Hammer Mill of Chicago, Illinois. The crushed raw pressed bone is preferably stored in a large surge-hopper-feeder bin in order to provide a continuous supply of material to the baking oven.

The baking oven

The baking oven is adapted to heat the meat tissue and fat tissue adhering to the bone particles which is continuously supplied to the oven through an air lock to a temperature which effects crisping the pieces of fat and tissue adhering to the bone particles so that fat and meat tissue are more frangible and more readily fractured and separated from the particles of bone during passage through the oven and during the subsequent processing of the bone material. The preferred type of oven excludes air from the heating chamber in order to minimize the risk of scorching or burning the meat tissue and reduce the value of the organic material adhering to the bone particles while heating the material to a temperature of between 99°C to 121°C. It is also preferred that the moisture which is vaporized during baking be retained within the interior of the oven so that the pressure within the oven chamber will rise above atmospheric pressure and provide an oxygen-free atmosphere of superheated steam. An oven which has been found suitable for baking the crushed pressed raw bone material at a rate of about 3200 kg per hour is a continuous rotating tray type vertical transfer dryer, such as a Wyssmont "Turbo Dryer" manufactured by the Wyssmont Company, Fort Lee, New Jersey. In the Wyssmont "Turbo Dryer", the crushed bone material is moved through the oven which has a plurality of vertically spaced trays continuously rotating about the vertical axis of the oven by being wiped off each tray onto a tray below by stationary wipers while continuously circulating a heated gas around the trays. Other types of heaters, however, can be used for crisping the fat and meat tissue adhering to the bone particles, such as a rotary hot air direct fired rotating drum, but care must be exercised to avoid using such elevated temperature or prolonged retention times which result in burning or scorching of the feed material, particularly with particles of about 1,3 cm in diameter or larger.

The crisped bone material from the baking oven is preferably air cooled to about ambient temperature after it is discharged from the baking oven and while being transported on a tumbling conveyor means by enclosing the conveyor within an air cooled jacket to further increased the fragility of the crisped pieces of fat and meat tissue adhering to the bone particles before depositing the baked bone material onto a screen separator or size which separates out material having a selected range of particle size desired in the final low fat stabilized bone product.

Vibrating screen separator

When preparing low fat stabilized bone for high quality gelatin a particle size range of from about 0,32 cm to about 1,9 cm is preferred. An apparatus suitable for separating material having the foregoing selected particle size range is a vibrating two deck gravity screen separator adapted to remove particles of bone and organic tissue which are larger or smaller than desired in the final product. The upper of the two spaced vibrating screens preferably is a 2-mesh screen which retains particles in excess of about 1,9 cm in diameter and the lower screen is a 6-mesh screen which retains particles larger than about 0,32 cm so that the selected middle fraction which is recovered for further processing has a size ranging between about 0,48 cm and 1,6 cm diameter. The oversized material is preferably recycled to the crushing mill and the undersized material having a particle size below 0,48 cm is conveyed to a gravity separator preferably of the same type used for the selected particle size material which recovers clean heavy fine bone material which can be used for preparing gelatin or glue of high quality. A suitable screen separator or sizer for use in the process is a 34-4800 "Screen-aire" vibrating screen separator manufactured by Forsbergs, Inc. of Thief River Falls, Minnesota, which has a capacity of about 5500 kg per hour.

The selected sized material from the screen separator is preferably passed through an air separator before transfer of the material to a gravity separator to remove the very low density particles in order to increase the efficiency of the gravity separation.

The gravity separator

The selected sized material is continuously conveyed to a dry gravity density separator which is adapted to remove the low density non-bone particles of fat and meat tissue and provides a clean high density bone fraction which forms the desired low fat stabilized bone product having a particle size within the selected range. The density separation is carried out by continuously depositing the selected sized material from a surge-hopper by means of a vibrator feeder onto the dry gravity separator table which in the preferred form comprises a reciprocating inclined air table having a 10-mesh screen deck. The particles of bone having a high density move upwardly over the screen deck and are collected at the upper end separately from the low density particles of fat and meat tissue along with a small amount of light bone remaining in the selected particle size material. The very low density material which concentrates at the bottom of the inclined separator table is discharged as culls and can be used in meat meal. The intermediate density particles are preferably recycled through the gravity separator. A suitable gravity separator for use in the process is a Forsbergs Model 200-V gravity separator manufactured by Forsbergs, Inc. which has a capacity of about 1800—2270 kg per hour. The air pressure, the reate of reciprocation as well as the inclination of the screen deck of the Forsbergs gravity separator can be varied to provide the desired degree of density separation and final product.

The high density material which is collected at the upper end section of the gravity separator table in the foregoing process is high quality clean, stabilized ossein bone material. The low fat stabilized bone product produced in the above described manner from raw trimmed beef bones when shipped has a typical composition: 4.65 percent moisture, 29.05 percent protein, 2.49 percent fat, 1.98 percent soluble ammonia and 61.68 percent ash, all on a weight basis. The low fat stabilized bone product is capable of being used for making high quality gelatin.

The yield of clean stabilized bone having the foregoing analysis in the herein disclosed process is about 15.6 percent by weight based on 100 percent of the raw trimmed bone deposited in the receiving pits. About 46.4 percent of the raw trimmed bone fed to the screw press is recovered as stripped pressed bone. The selected particle size fraction having a particle size range between about 0,48 to 1,6 cm comprises about 29.47 percent by weight of the original raw bone material. And, the clean stabilized fine bone material or "rice bone" obtained from the undersized material recovered from the screen separator comprises about 2.6 percent by weight of the original raw trimmed bone material and is of substantially the same high quality as the high density gravity separated material from the selected particle size fraction.

It will be understood that the process of the present invention provides a continuous and essentially automated process of producing clean and stabilized bone of high quality from raw bone material from various sources and having varying amounts of fat and organic tissue adhering thereto or admixed therewith. It will also be evident that modification can be made in the type of apparatus used in the system. For example, two or more heating ovens, screen separators or gravity separators can be used so that surge-hoppers for storing the bone material between processing steps can be eliminated. Also, where the desired low fat stabilized bone product must have a particle size larger or smaller than that required for the production of gelatin, apparatus for crushing and sizing of the particles of bone can be varied to produce the required particle size in the final product.

The term "stabilized gelatin bone" is a recognized standard term in the gelatin and glue arts meaning that the bone is able to withstand prolonged storage under ambient conditions without development of odor, discoloration or bug, bacteria or fungal infectation; and that the bone must have a moisture content not in excess of 10 percent by weight after oven drying at a temperature over 82°C which is a kill temperature for any bacteria in the bone and a fat content below 3 percent by weight to prevent rancidity.

**Claims**

1. A continuous process for cleaning and stabilizing raw bone for making high quality gelatin comprising;

(a) reducing raw bone from its natural state to a size suitable for passing the raw bone into a press and continuously feeding the raw bone material having moisture fat and meat tissue associated therewith into a said press prior to applying heat to said raw bone material to effect a significant reduction in the moisture and fat content thereof with said press mounted within a cage having at least one wall provided with apertures smaller than the minimum size desired in the bone product,

(b) applying pressure by means of said press raw bone material within said cage to force fat and meat tissue through said apertures in the cage,

(c) discharging pressed raw bone material from the cage separate from said fat and meat tissue which are discharged through said apertures with said pressed bone material having a particle size ranging between 3 mm and 40 mm and stripped of a substantial portion of said moisture fat and meat tissue initially associated with said raw bone,

(d) continuously feeding pressed raw bone material having a particle size between 3 mm and 40 mm and having moisture and residual fat and meat tissue associated therewith into an oven dryer and heating said pressed bone material therein without being in contact with liquid fat and without scorching to reduce the moisture content and effect crisping fat and meat tissue remaining on said pressed bone material whereby the fat and meat tissue remaining on said pressed bone material are adapted to be separated from the pressed bone material by fracturing during said heating and subsequent screening and gravity separation treatment,

(e) passing said bone material continuously through a screen separator means which removes all but a selected range of particle size from said bone material, and

(f) continuously feeding said bone material having the selected range of particle size to a gravity separator means from which high density clean stabilized bone product suitable for making high quality gelatin is recovered separately from low density material.

2. A process as in Claim 1, wherein said pressed bone material is subjected to a crushing means to further reduce the average particle size thereof to about 1,3 cm before feeding the pressed bone material into said oven.

3. A process as in Claim 2, wherein said heated bone material having a particle size above the selected range of particle size is recycled to said crushing means and again heated in said oven dryer.

4. A process as in Claim 1, wherein the heated bone material is cooled before passing said bone material into said separator means.

5. A process as in Claim 1, wherein the heated bone material having a particle size below said selected range is fed into a gravity separator means which recovers clean heavy fine bone material suitable for use in producing gelatin and glue products.

6. A process as in Claim 1, wherein bone material of the said selected range is subjected to an air separation treatment to remove the lowest density fraction therefrom prior to feeding said bone material to said gravity separator means.

7. A process as in Claim 1, wherein the lowest density material from said gravity separator means is recovered for producing bone meal material.

8. A process as in Claim 1, wherein a fraction of said selected particle size material intermediate said high density material and said low density material is recycled through said gravity separator means.

9. A process as in Claim 1, wherein said pressure is applied to said crushed raw bone material by feeding said raw bone material into a screw type press having an interrupted screw flight and a choke axially mounted at the discharge end of said cage which is adapted to provide pressure on said crushed raw bone material of between 17,5 and 35 bar.

10. A process as in Claim 1, wherein said pressed bone material is baked in an oven dryer which has an oxygen-free atmosphere.

11. A process as in Claim 1, wherein said pressed bone material is baked in an oven dryer which has a dry atmosphere of superheated steam.

12. A process as in Claim 1, wherein said pressed bone material is baked in an oven dryer having a plurality of vertically spaced trays continuously rotating about the vertical axis of the oven dryer with the bone material being moved through the oven dryer by being wiped off each tray onto a tray below by stationary wipers while continuously circulating a heated gas around said trays.

13. A process as in Claim 1, wherein said pressed bone material is heated to a temperature of about 121°C in an atmosphere of superheated steam to effect crisping in said pressed bone material.

14. A process as in Claim 1, wherein said selected particle size material is separated into essentially high density bone particles and essentially low density non-bone material by means of an inclined vibrating air table.

15. A process as in Claim 1, wherein the said pressed bone material which is fed into said oven dryer has a fat content of about 4 percent by weight of the bone material.

16. A high density clean stabilized bone product adapted for producing high quality gelatin when made from raw bone by the process of Claim 1.

**Revendications**

1. Procédé continu de nettoyage et de stabilisation d'os bruts pour la production de gélatine de haute qualité, caractérisé en ce que:

(a) on réduit les os bruts depuis leur état naturel à une taille appropriée pour leur passage dans une presse et/ou alimente en continu ladite presse en matériau osseux brut associé à l'humidité, de la graisse et des tissus musculaires avant de chauffer ledit matériau osseux brut pour réaliser une réduction notable de sa teneur en humidité et en matières grasses, ladite presse étant montée à l'intérieure d'une cage possédant au moins une paroi munie d'ouvertures de dimensions inférieures à la taille minimale désirée pour le produit osseux;

(b) on applique une pression au matériau osseux brut au moyen de ladite presse à l'intérieure de ladite cage pour forcer la graisse et le tissu musculaire à travers lesdites ouvertures de la cage;

(c) on décharge le matériau osseux brut comprimé de la cage séparément de ladite graisse et des tissus musculaires qui sont déchargés à travers lesdites ouvertures, ledit matériau osseux comprimé présentant des particules d'une taille comprise entre 3 et 40 mm débarassées d'une partie sensible de ladite humidité, de la graisse et des tissus musculaires initialement associés auxdits os bruts;

(d) on alimente en continu un sécheur à four en matériau osseux brut comprimé ayant des particules d'une taille comprise entre 3 mm et 40 mm et associé à de l'humidité et à de la graisse et à des tissus musculaires résiduels, et on y chauffe les dits matériaux osseux comprimés sans contact avec de la graisse liquide et sans le roussir pour réduire la teneur en humidité et rendre craquants la graisse et le tissu musculaire restant sur ledit matériau osseux comprimé grâce à quoi la graisse et le tissu musculaire restant sur ledit matériau osseux comprimé se prêtent à la séparation d'avec la matériau osseux comprimé par brisure durant ledit chauffage et les traitements suivants de passage au crible et de séparation par gravité;

(e) on fait passer en continu ledit matériau osseux à travers un moyen séparateur à crible qui ne conserve que les particules dudit matériau osseux d'une taille comprise dans une gamme choisie; et

(f) on alimente en continu avec ledit matériau osseux dont les particules ont une taille comprise dans une gamme choisie un moyen séparateur à gravité d'où le produit osseux propre, stabilisé, de haute densité convenant à la production de gélatine de haute qualité est recueilli séparément des matériaux à faible densité.

2. Procédé suivant la revendication 1, dans lequel ledit matériau osseux comprimé est soumis à un moyen broyeur pour réduire davantage la taille moyenne des particules à environ 1,3 cm avant de charger le matériau osseux comprimé dans ledit four.

3. Procédé suivant la revendication 2, dans lequel ledit matériau osseux chauffé dont les particules ont une taille supérieure à la gamme choisie pour la taille des particules, est recyclé dans ledit moyen broyeur puis chauffé à nouveau dans ledit sécheur à four.

4. Procédé suivant la revendication 1, dans lequel ledit matériau osseux chauffé est refroidi avant que ledit matériau osseux passe dans ledit moyen séparateur.

5. Procédé suivant la revendication 1, dans lequel le matériau osseux chauffé dont les particules ont une taille inférieure à ladite gamme choisie est envoyé dans un moyen séparateur à gravité qui recueille le matériau osseux fin, dense et propre approprié pour être utilisé dans la production de gélatine, et de colles.

6. Procédé suivant la revendication 1, dans lequel le matériau osseux dans ladite gamme choisie est soumis à un traitement de séparation à l'air pour en retirer la partie de plus faible densité avant d'envoyer ledit matériau osseux audit moyen séparateur à gravité.

7. Procédé suivant la revendication 1, dans lequel ledit matériau de plus faible densité provenant dudit moyen séparateur à gravité est récupéré pour la préparation de matériau à poudre d'os.

8. Procédé suivant la revendication 1, dans lequel une partie duduit matériau à taille de particule choisie intermédiaire entre ledit matériau à haute densité et ledit matériau à faible densité est recyclée dans ledit moyen séparateur à gravité.

9. Procédé suivant la revendication 1, dans lequel la pression est appliquée audit matériau osseux brut broyé en chargeant ledit matériau osseux brut dans une presse de type à vis possédant une fuite de vis interrompue et un étranglement monté axialement à l'extrémité de décharge de ladite cage, qui est adaptée pour délivrer une pression sur ledit matériau osseux brut broyé comprise entre 17,5 et 35 bars.

10. Procédé suivant la revendication 1, dans lequel ledit matériau osseux comprimé est cuit dans un sécheur à four ayant une atmosphère sans oxygène.

11. Procédé suivant la revendication 1, dans lequel ledit matériau osseux comprimé est cuit dans un sécheur à four ayant une atmosphère sèche de vapeur surchauffée.

12. Procédé suivant la revendication 1, dans lequel ledit matériau osseux comprimé est cuit dans un sécheur à four comportant une série de plateaux espacés verticalement en rotation continue autour de l'axe vertical du sécheur à four, le matériau osseux étant transporté à travers le sécheur à four en étant balayé de chaque plateau dans un plateau inférieure par des racleurs fixes tout en assurant une circulation continue de gaz chauffés autour des dits plateaux.

13. Procédé suivant la revendication 1, dans lequel ledit matériau osseux comprimé est chauffé à une température d'environ 121°C dans une atmosphère de vapeur surchauffée pour rendre craquant ledit matériau osseux comprimé.

14. Procédé suivant la revendication 1, dans lequel ledit matériau à taille de particule choisie est séparé en particules d'os de relativement haute densité et en matière sans os de relativement faible densité au moyen d'une table à air vibrante inclinée.

15. Procédé suivant la revendication 1, dans lequel ledit matériau osseux comprimé chargé dans ledit sécheur à four possède une teneur en matières grasses d'environ 4% en poids du matériau osseux.

16. Produit osseux stabilisé propre de forte densité adapté pour la production de gélatine de haute qualité, réalisé à partir d'os bruts par le procédé de la revendication 1.

**Patentansprüche**

1. Kontinuierliches Verfahren zum Säubern und Stabilisieren von Rohknochen zur Herstellung von Gelatine hoher Qualität, welches aufweist:

(a) Zerkleinern von Rohknochen von natürlicher Größe auf eine zum Eingeben des Rohknochens in eine Presse geeignete Größe und kontinuierliches Zuführen des Rohknochenmaterials, an dem Feuchtigkeit, Fett und Fleischgewebe haftet, in die Presse vor Anwendung von Wärme auf dieses Rohknochenmaterial, um eine signifikante Reduktion dessen Feuchtigkeits- und Fettgehaltes zu bewirken, wobei die Presse in einem Käfig angeordnet ist, welcher mindestens eine mit kleineren Öffnungen als die minimal erwünschte Größe im Knochenprodukt ausgerüstete Wand besitzt;

(b) Anweden von Druck auf das Rohknochenmaterial in dem Käfig mittels der Presse, um Fett und Fleischgewebe durch die Öffnungen im Käfig zu drücken;

(c) Abgeben des gepressten Rohknochenmaterials aus dem Käfig, getrennt vom Fett und Fleischgewebe, die durch die Öffnungen abgegeben werden, wobei das gepresste Knochenmaterial eine Teilchengröße im Bereich zwischen 3 und 40 mm, gesäubert von einem beträchtlichen Anteil des anfänglich zum Rohknochen gehörigen Fett und Fleischgewebes, besitzt;

(d) Kontinuierliches Zuführen des gepressten Rohknochenmaterials mit einer Teilchengröße zwischen 3 mm und 40 mm, an welchem Restfett und -fleischgewebe haften, zu einem Ofentrockner und Aufheizen des gepressten Knochenmaterials darin, ohne daß sich dieses im Kontakt mit flüssigem Fett befindet und ohne dieses zu verschmoren, um den Feuchtigkeitsgehalt zu vermindern und Rösten von den Fett und Fleischgewebe, das an dem gepressten Knochen verbleibt, zu bewirken, wodurch das an dem gepressten Knochenmaterial verbleibende Fett und Fleischgewebe zur Trennung von dem gepressten Knochenmaterial durch Brechen während des Heizens und anschließendes Sieben und Gravitationsseperationsbehandlung vorbereitet wird;

(e) Kontinuierliches Führen des Knochenmaterials durch eine Siebseperatoreinrichtung, welche Alles außer einem ausgewählten Teilchengrößebereich aus dem Knochenmaterial entfernt; und

(f) Kontinuierliches Zuführen des Knochenmaterials mit dem ausgewählten Teilchengröße-Bereich zu einer Gravitationstrenneinrichtung, aus welcher sauberes stabilisiertes Knochenprodukt hoher Dichte, geeignet für die Herstellung von Gelatine hoher Qualität, getrennt von Material niedriger Dichte, gewonnen wird.

2. Verfahren nach Anspruch 1, in welchem das gepresste Knochenmaterial einer Zerkleinerungseinrichtung unterworfen wird, um die durchschnittliche Teilchengröße auf etwa 1,3 cm vor Einführen des gepressten Knochenmaterials in den Ofen zu reduzieren.

3. Verfahren nach Anspruch 2, in welchem das erhitzte Knochenmaterial, welches eine Partikelgröße oberhalb des ausgewählten Bereichs von Partikelgrößen besitzt, zu der Zerkleinerungseinrichtung rückgeführt und wieder im Ofentrockner erhitzt wird.

4. Verfahren nach Anspruch 1, in welchem das erhitzte Knochenmaterial vor Überführen des Knochenmaterials in die Seperationseinrichtung abgekühlt wird.

5. Verfahren nach Anspruch 1, in welchem das erhitzte Knochenmaterial, welches eine Teilchengröße unterhalb des ausgewählten Bereiches besitzt, in eine Gravitationsbrenneinrichtung geführt wird, welche sauberes schweres feines Knochenmaterial für die Verwendung bei der Herstellung von Gelatine und Leimprodukten geeignet, gewinnt.

6. Verfahren nach Anspruch 1, in welchem Knochenmaterial des ausgewählten Bereiches einer Windsichtbehandlung unterworfen wird, um die Fraktion niedrigster Dichte aus demselben vor Zuführen des Knochenmaterials zur Gravitations-Separationseinrichtung.

7. Verfahren nach Anspruch 1, wobei das Material niedrigster Dichte aus dieser Gravitationsseparationseinrichtung zur Herstellung von Knochenmehlmaterial gewonnen wird.

8. Verfahren nach Anspruch 1, wobei eine Fraktion des Materials ausgewählter Partikelgröße zwischen dem Mateiral hoher Dichte und dem Mateiral niedriger Dichte durch die Gravitationsseperationseinrichtung rückgeführt wird.

9. Verfahren nach Anspruch 1, wobei der Druck auf das zerkleinerte Rohknochenmaterial durch Einführen des Rohknochenmaterials in eine Presse vom Typ mit Schnecke mit unterbrochenen Blättern geführt wird, wobei eine Drossel axial am Ausgabeende des Käfigs angeordnet ist, welche dazu eingerichtet ist, Drücke auf das zerkleinerte Rohknochenmaterial von zwischen 17,5 und 35 bar auszuüben.

10. Verfahren nach Anspruch 1, wobei das gepresste Knochenmaterial in einem Ofentrockner gebacken wird, welcher eine sauerstoffreie Atmosphäre besitzt.

11. Verfahren nach Anspruch 1, wobei das gepresste Knochenmaterial in einem Ofentrockner gebacken wird, welcher eine trockene Atmosphäre überhitzten Dampfes besitzt.

12. Verfahren nach Anspruch 1, wobei das gepresste Knochenmaterial in einem Ofentrockner gebacken wird, welcher eine Vielzahl von vertikal mit Abstand angeordneten Blechen aufweist, welche sich kontinuierlich um die vertikale Achse des Ofentrockners drehen, wobei das Knochenmaterial dadurch durch den Ofentrockner, bewegt wird, daß jedes Blech auf ein Blech unterhalb durch stationäre Wischer abgewischt wird, während kontinuierlich ein erhitztes Gas um diese Bleche zirkuliert.

13. Verfahren nach Anspruch 1, wobei das gepresste Knochenmaterial auf eine Temperatur von etwa 121°C in einer Atmosphäre von überhitztem Dampf erhitzt wird, um Rösten in dem gepressten Knochenmaterial zu bewirken.

14. Verfahren nach Anspruch 1, wobei das Material ausgewählter Teilchengröße in Knochenpartikel im wesentlichen hoher Dichte und nicht Knochenmaterial im wesentlichen niedriger Dichte mittels eines geneigten Rütteltisches aufgetrennt wird.

15. Verfahren nach Anspruch 1, wobei das gepresste Knochenmaterial, welches in den Ofentrockner eingeführt wird, einen Fettgehalt von etwa 4 Gew.-% des Knochenmaterials besitzt.

16. Stabilisiertes Knochenprodukt hoher Dichte, eingestellt für die Herstellung von Gelatine hoher Qualität, hergestellt aus Rohknochen gemäß dem Verfahren des Anspruchs 1.

WHOLE RAW BONE → ELECTRO-MAGNET → TRAMP METAL

ELECTRO-MAGNET → PRE-HOGGER CRUSHER → SURGE HOPPER FEEDER

ELECTRO MAGNET → TRAMP METAL

TO RENDERING

PATE MEAT AND FAT → FAT TO REFINERY / DEFATTED PROTEIN

BONE STRIPPER SCREW PRESS

STRIPPED BONE → CRUSHER MILL → SURGE HOPPER FEEDER

OVERSIZED RECYCLED

GRAVITY SEPARATOR ← UNDER SIZE ← SCREEN SEPARATOR ← AIR COOLER AND TUMBLER ← HEATING OVEN

EVAPORATED MOISTURE

SELECTED PRACTICE SIZE → AIR SEPARATOR → HEAVY SELECTED SIZE

LIGHT MEAT MEAL

SURGE HOPPER-FEEDER

LIGHT MEAL AND LIGHT BONE

MEAT MEAL AND LIGHT BONE → LIGHT BONE AND MEAT MEAL

RECYCLE MID.

GRAVITY SEPARATOR

FINE CLEAN STABILIZED BONE → BULK STORAGE → SHIPPING ← BULK STORAGE ← CLEAN STABILIZED BONE

1